# EUROPÄISCHE PATENTSCHRIFT

(11) **EP 2 707 665 B1**
(45) Veröffentlichungstag und Bekanntmachung des Hinweises auf die Patenterteilung: **19.11.2014**
(21) Anmeldenummer: 12705299.1
(22) Anmeldetag: 22.02.2012
(51) Int. Cl.: F27B 3/08, C01B 33/035

(54) **REDUKTIONSOFEN**
REDUCTION FURNACE
FOUR DE RÉDUCTION

(30) Priorität: 13.05.2011 DE 102011101526; 20.09.2011 DE 102011083036
(43) Veröffentlichungstag der Anmeldung: 19.03.2014
(73) Patentinhaber: SMS Siemag AG, 40237 Düsseldorf (DE)
(72) Erfinder: KÖNIG, Roland, 45472 Mülheim a. d. Ruhr (DE); STRIEDER, Detlef, 47239 Duisburg (DE); DEGEL, Rolf, 40880 Ratingen (DE); WEYER, Axel, 42349 Wuppertal (DE); WEISCHEDEL, Walter, 40670 Meerbusch (DE)
(86) Internationale Anmeldenummer: PCT/EP2012/052987
(87) Internationale Veröffentlichungsnummer: WO 2012/156108

(56) Entgegenhaltungen:
- DE-A1- 2 946 588
- DE-C- 506 303
- DE-C- 973 715

## Beschreibung

Die Erfindung betrifft einen Reduktionsofen, insbesondere zur Siliziumherstellung, nach dem Oberbegriff des Anspruchs 1.

### Stand der Technik und Problemstellung

Die Leistung von Reduktionsöfen ist insbesondere im Fall von Silizium - Öfen begrenzt, weil für die Produktion von metallurgischem Silizium Kohleelektroden (prebaked electrodes) und für die Produktion von Solar - Silizium hochreine Graphitelektroden benötigt werden. Der maximale Durchmesser von Kohleelektroden liegt bei 1270 mm - 1400 mm. Hochreine Graphitelektroden sind Graphitelektroden, die nachträglich gereinigt werden. Da hierfür das Graphit durchdrungen werden muss, ist der maximale Durchmesser derzeit auf etwa 400 - 450 mm begrenzt, obwohl Graphitelektroden bis zu 800 - 850 mm Durchmesser lieferbar sind.

Diese Limitierungen bei den Elektroden limitieren die möglichen Leistungen der Silizium - Öfen für metallurgisches Silizium auf 25-30 MW und für Solar-Silizium auf etwa 10-12 MW.

Der Silizium - Prozess arbeitet ohne Schlackenbad und die Größe der reaktiven Zone im Ofen hängt neben der Leistung vor allem vom Durchmesser der Elektroden und deren Kontaktfläche mit dem Rohmaterial ab.

Der Einsatz preiswerter Söderberg -Elektroden (Elektrodenpaste wird in einem Stahlmantel (Casing) geformt und erst im Ofen gebacken) ist wegen der erforderlichen Reinheit (Fe aus dem Stahlmantel gelänge ins Produkt) nicht möglich.

Kohleelektroden sind vergleichsweise teuer, Graphitelektroden noch teurer. Vom Handling her sind Kohleelektroden aufgrund Länge und Durchmesser und Gewicht und relativ geringer Festigkeit anspruchsvoll.

### Neuere Entwicklungen und Trends

Aus der DE 506 303 C ist ein Verfahren zum Betreiben eines Elektroschmelzofens bekannt.

Die DE 29 46 588 A1 offenbart einen Dreiphasen-Lichtbogenschmelz- oder Reduktionsofen.

Aus der DE 973 715 C ist ein elektrischer Lichtbogen- oder Reduktionsofen bekannt.

Um nun höhere Leistungen darstellen zu können bei gleichzeitig niedrigeren Elektrodenkosten wurde die sogenannte Composite - oder Compound - Elektrode entwickelt (z.B. Typ "ELSA"). Um einen Graphitkern herum wird Söderbergpaste durch ein festes Casing in Form gebracht und mit dem Graphitkern verbacken. Diese Technologie erfordert jedoch aufwändigere Elektrodenstränge mit 2 Nachsetzvorrichtungen (für Kern und eigentliche Elektrode getrennt) und teure Graphitelektroden als Kern. Aufgrund des Stromverdrängungseffektes fließt allerdings nur wenig Strom durch die stromtechnisch hochbelastbare Graphitelektrode in der Elektrodenmitte, sondern eher durch die weniger belastbare Söderbergpaste. Die Graphitelektrode wird also nur zu einem Bruchteil ihrer Leistungsfähigkeit genutzt.

Es ist die Aufgabe der Erfindung, einen Reduktionsofen bezüglich der Effektivität der Elektroden zu verbessern.

Diese Aufgabe wird für einen eingangs genannten Reduktionsofen erfindungsgemäß mit den kennzeichnenden Merkmalen des Anspruchs 1 gelöst. Durch die Ausbildung einer herkömmlichen Elektrode als Bündel aus mehreren Einzelelektroden lassen sich insbesondere Leistungen von großen Elektroden durch Verwendung kleinerer Einzelelektroden erreichen.

Der erfindungsgemäße Reduktionsofen kann in bevorzugter Detailgestaltung als Silizium-Ofen ausgebildet sein. Bevorzugt kann es sich um einen Ofen zur Herstellung von Solar-Silizium handeln.

Bei einer bevorzugten Weiterbildung des Reduktionsofens ist es vorgesehen, dass die Einzelelektroden jeweils einen im Wesentlichen kreisförmigen Querschnitt aufweisen.

Vorteilhaft ist es vorgesehen, dass die Einzelelektroden aus Graphit, insbesondere aus hochreinem Graphit, bestehen. Hierdurch lässt sich eine hohe Reinheit des Siliziums erzielen. In bevorzugter Weiterbildung ist es vorgesehen, dass die Einzelelektroden einen Durchmesser von nicht mehr als etwa 650 mm, bevorzugt nicht mehr als etwa 450 mm, aufweisen. Dies gilt insbesondere für den Einsatz hochreiner Graphit-Elektroden.

Allgemein vorteilhaft ist es dabei vorgesehen, dass der Reduktionsofen eine Leistung von mehr als etwa 10 Megawatt, insbesondere mehr als etwa 12 Megawatt, aufweist. Solche Öfen werden z.B. für Solar-Silizium erst mit erfindungsgemäßen Elektroden möglich.

Im Interesse einer zweckmäßigen Stromverteilung sind die Einzelelektroden auf einer Linie senkrecht zu dem Kreisbogen angeordnet. Bei alternativen Ausführungsformen der Erfindung kann aber auch eine andere Geometrie gewählt werden. Insbesondere kann der Ofen auch als Rechteck-Ofen ausgelegt sein, bei dem die Elektrodenbündel zum Beispiel entlang einer oder mehrerer paralleler Geraden angeordnet sind.

Bei einer möglichen Ausführungsform ist es vorgesehen, dass die Einzelelektroden des Elektrodenbündels über genau einen Elektrodenstrang elektrisch verbunden sind.

Bei einer hierzu alternativen Ausführungsform können die Einzelelektroden des Elektrodenbündels aber auch mit getrennten Elektrodensträngen verbunden sein, wodurch höhere Leistungen und niedrigere Elektrodenströme erzielt werden können.

Allgemein vorteilhaft kann es vorgesehen sein, dass Einzelelektroden des Elektrodenbündels separat voneinander aus dem Ofengefäß herausfahrbar sind.

Bei einer bevorzugten Weiterbildung der Erfindung ist es vorgesehen, dass das Elektrodenbündel um einen eigenen Mittelpunkt rotieren oder oszillieren kann. Hierdurch könnte Verkrustungen der Mölleroberfläche vorgebeugt werden. Allgemein üblich kann das Ofengefäß relativ zu den Elektroden bewegt, z.B. gedreht, werden. Alternativ oder ergänzend hierzu können auch die Elektroden bewegbar angeordnet sein.

Weitere Vorteile und Merkmale ergeben sich aus den nachfolgend beschriebenen Ausführungsbeispielen sowie aus den abhängigen Ansprüchen.

Nachfolgend werden Ausführungsbeispiele der Erfindung beschrieben und anhand der anliegenden Zeichnungen näher erläutert.

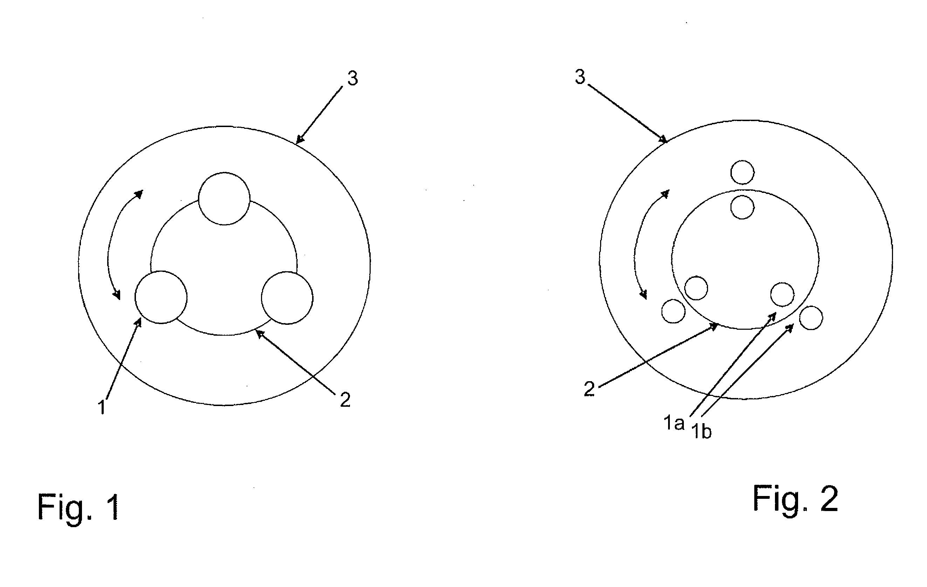

- Fig. 1: zeigt eine schematische Draufsicht auf einen Reduktionsofen nach dem Stand der Technik.
- Fig. 2: zeigt eine schematische Draufsicht auf einen erfindungsgemäßen Reduktionsofen.

Bevorzugtes Ausführungsbeispiel der Erfindung: Die Doppel - Elektrode

Beim vorliegenden Ausführungsbeispiel sind, jeweils an Stelle einer Composite - Elektrode 1 großen Durchmessers, mindestens zwei (oder je nach Verschaltung auch mehr) Graphit - Elektroden 1 a, 1 b kleineren Durchmessers vorgesehen. Die Anordnung erfolgt in einem kreisrunden Ofengefäß in einer Linie von der Ofenmitte ausgehend hintereinander rechtwinklig zum Elektroden - Teilkreisdurchmesser. Der äußere Rand der äußeren Elektrode 1 a und der innere Rand der inneren Elektrode 1 b liegen jeweils idealerweise, aber nicht zwingend etwas außerhalb des Randes der vergleichbaren großen Elektrode 1. Zwischen den beiden Elektroden 1 a, 1 b befindet sich freier Raum. Die zwei (oder mehr) Elektroden 1a, 1b können entweder mit vollkommen getrennten Elektrodensträngen oder über nur einen Elektrodenstrang verbunden ausgeführt werden. Bei Ausführung mit getrennten Elektrodensträngen könnten so verschiedene Elektrodenverbräuche ausgeglichen werden oder auch einzelne Elektroden aus dem aktiven Ofenbereich herausgefahren werden.

Die Elektrodenpaare 1 a, 1 b bzw. Elektrodenbündel werden auf dem Teilkreis verteilt angeordnet. Bei einem runden Dreiphasenofen sind das üblicherweise 3 Elekrodenpaare bzw. -bündel.

Optional ist vorstellbar, dass je nach Erfordernissen des Prozesses die Elektrodenpaare 1 a, 1 b bzw. -bündel um ihren eigenen fiktiven Mittelpunkt (ca. auf dem Teilkreis) oszillieren oder rotieren, d.h. dass sich in diesem Fall nicht nur ggf. das Ofengefäß 3 drehen würde, sondern darüber hinaus die Elektrodenpaare bzw. -bündel 1 a, 1 b ("rotierender Elektrodenstrang"). Solches lässt sich mit den vergleichsweise leichten Elektrodensträngen einfacher als mit schweren Strängen realisieren. Auf diese Art würde z.B. Verkrustungen der Möllerobertläche vorgebeugt.

Auf diese Weise
- kann die mögliche Strombelastbarkeit der Graphitelektroden voll ausgenutzt werden;
- steht der Umfang zweier Elektroden gut verteilt für den Stromübergang zur Verfügung;
- können die Elektroden so positioniert werden, dass der Reaktionsraum trotz kleiner Elektrodendurchmesser ausreichend groß ist und das Herdvolumen wie gewünscht ausgefüllt wird, aber ohne Verzicht auf Schutzabstände zu den Gefäßwänden;
- können die Elektrodenstränge / der Elektrodenstrang deutlich leichter ausgeführt werden, da die Elektrodengewichte deutlich geringer sind;
- können die Elektroden mit weniger Aufwand schnell bewegt werden;
- können die Betriebskosten gesenkt werden;
- kann das Handling vereinfacht werden (nur ein Typ Elektroden, kein Paste nachfüllen)
- ist geringer Energieverbrauch erzielbar, da Graphitelektroden einen 80% geringeren Eigenwiderstand haben als Kohle- oder gar Söderbergelektroden. Gegenüber der Composite - Elektrode liegt der Vorteil bei etwa 50%. Bezogen auf den Gesamtenergieverbrauch macht dies etwa 3-5% aus.
- lässt sich je nach Verschaltung der Herdwiderstand erhöhen, was zu geringeren Transformatorgrößen und gleichfalls geringerem Energieverbrauch führt. oder es ist eine Leistungserhöhung bei gegebenen Werten erzielbar;
- ist die sonst oft übliche Elektroden - Teilkreisverstellung bereits im Konzept vorhanden und sehr variabel ausführbar.
- lässt je nach Verschaltung durch unterschiedlichen Leistungseintrag auch eine Art "elektrodynamische Teilkreisverstellung" ausführen, d.h. z.B. mehr Energieeintrag über die innere und weniger über die äußere Elektrode.

Die Herstellung von Solar - Silizium in leistungsstarken Öfen (etwa > 10 MW) wird aufgrund der besonderen Limitierung des Durchmessers wegen der erforderlichen Reinigung der Graphitelektroden gar erst mit Doppel - Elektroden möglich.

Da Silizium - Öfen bevorzugt oszillierend rotierend ausgeführt werden, kann eine gewisse Verkleinerung des Reaktionsraums sozusagen in Richtung des Teilkreises in Kauf genommen werden. Das heißt, sollte der Reaktionsraum anstelle einer idealisierten runden Form eher eine leicht ovale Form annehmen, so werden diese durch die Drehbewegungen wieder ausgeglichen, d.h. die Reaktionsräume werden auf diese Art wieder verbunden.

### Weitere Merkmale:

Aufgrund der erwähnten Limitierung des maximalen Durchmessers, bis zu dem Graphitelektroden für die Solarsilizium - Herstellung ausreichend gereinigt werden können (derzeit ca. 400 mm), sind für die Solarsilizum - Produktion mit höheren Leistungen (> ca. 10 MW) zwingend Konzepte mit einer größeren Anzahl Elektroden erforderlich. Der Solar - Silizum - SAF mit Doppel - Elektroden vermeidet hier 6 - Elektroden - Rechteck - Öfen oder unerprobte Bauformen.

Die beschriebene Doppel - Elektrode ist leichter:
Eine 1700er Composite - Elektrode wiegt je Meter etwa 3,4 t.
Zwei 600er Graphit - Elektroden wiegen je Meter nur etwa 0,95 t.

Bei kleineren Öfen bis etwa 5-10 MW können beide Elektroden auch zusammengefasst werden (das heißt, man benötigt 2 Kontaktbacken und nur eine Nachsetzvorrichtung).

Bei größeren Öfen sind 2 getrennte Nachsetzvorrichtungen vorzusehen, allerdings in leichter Ausführung.

Die elektrische Verschaltung kann wie bei einem 3 - Elektroden - SAF ausgeführt werden. Alternativ ist aber auch eine Verschaltung ähnlich wie bei einem 6 - Elektroden - Rechteckofen möglich. Dadurch können Elektrodenstrom und Herdwiderstand positiv beeinflusst werden, so dass z.B. 15% höhere Leistungen oder niedrigere Elektrodenströme realisiert werden können.

Idealerweise eignet sich diese Technologie für alle Prozesse, die sich nicht für preiswerte Söderbergelektroden eignen. Grundsätzlich lassen sich aber alle Prozesse mit dieser Elektroden - Technologie betreiben, also nicht nur Silizium-und Solar-Silizum - SAF.

### Bezugszeichenliste

- 1: Composite-Elektrode (Stand der Technik)
- 1a, 1b: Doppelte Graphitelektroden, gegebenenfalls hochrein
- 2: Teilkreis
- 3: Herddurchmesser (Innenseite Ausmauerung, Ofengefäß)

## Patentansprüche

1. Reduktionsofen, insbesondere zur Siliziumherstellung, umfassend
ein Ofengefäß (3) und eine Mehrzahl von Elektroden (1a, 1b), die in definierter Anordnung zueinander entlang eines Kreisbogens (2) in dem Ofengefäß angeordnet sind, **dadurch gekennzeichnet, dass** wenigstens eine der Elektroden (1a, 1b) als Elektrodenbündel aus mehreren Einzelelektroden (1a, 1b) ausgebildet ist, wobei die Einzelelektroden (1a, 1b) auf einer Linie senkrecht zu dem Kreisbogen (2) angeordnet sind.

2. Reduktionsofen nach Anspruch 1, **dadurch gekennzeichnet, dass** die Einzelelektroden (1a, 1b) jeweils einen im Wesentlichen kreisförmigem Querschnitt aufweisen.

3. Reduktionsofen nach Anspruch 1 oder 2, **dadurch gekennzeichnet, dass** die Einzelelektroden (1a, 1b) aus Graphit, insbesondere aus hochreinem Graphit, bestehen.

4. Reduktionsofen nach Anspruch 3, **dadurch gekennzeichnet, dass** die Einzelelektroden (1a, 1b) einen Durchmesser von nicht mehr als etwa 650 mm, insbesondere nicht mehr als etwa 450 mm, aufweisen.

5. Reduktionsofen nach Anspruch 3 oder 4, **dadurch gekennzeichnet, dass** der Reduktionsofen eine Leistung von mehr als etwa 10 Megawatt, insbesondere mehr als 12 Megawatt, aufweist.

6. Reduktionsofen nach einem der vorhergehenden Ansprüche, **dadurch gekennzeichnet, dass** die Einzelelektroden (1a, 1b) des Elektrodenbündels über genau einen Elektrodenstrang elektrisch verbunden sind.

7. Reduktionsofen nach einem der Ansprüche 1 bis 5, **dadurch gekennzeichnet, dass** die Einzelelektroden (1a, 1 b) des Elektrodenbündels mit getrennten Elektrodensträngen verbunden sind.

8. Reduktionsofen nach einem der vorhergehenden Ansprüche, **dadurch gekennzeichnet, dass** Einzelelektroden (1a, 1b) des Elektrodenbündels separat voneinander aus dem Ofengefäß (3) herausfahrbar sind.

9. Reduktionsofen nach einem der vorhergehenden Ansprüche, **dadurch gekennzeichnet, dass** das Elektrodenbündel (1a, 1b) um seinen eigenen Mittelpunkt rotieren oder oszillieren kann.

## Claims

1. Reduction furnace, particularly for production of silicon, comprising a furnace vessel (3) and a plurality of electrodes (1a, 1b) which are arranged in the furnace vessel in a defined arrangement relative to one another along an arc (2), **characterised in that** at least one of the electrodes (1 a, 1 b) is constructed as an electrode bundle of a plurality of individual electrodes (1 a, 1 b), wherein the individual electrodes (1 a, 1 b) are arranged on a line perpendicular to the arc (2).

2. Reduction furnace according to claim 1, **characterised in that** the individual electrodes (1 a, 1 b) each have a substantially circular cross-section.

3. Reduction furnace according to claim 1 or 2, **characterised in that** the individual electrodes (1a, 1b) consist of graphite, particularly of highly pure graphite.

4. Reduction furnace according to claim 3, **characterised in that** the individual electrodes (1 a, 1 b) have a diameter of not more than approximately 650 millimetres, particularly not more than approximately 450 millimetres.

5. Reduction furnace according to claim 3 or 4, **characterised in that** the reduction furnace has a power of more than approximately 10 megawatts, particularly more than 12 megawatts.

6. Reduction furnace according to any one the preceding claims, **characterised in that** the individual electrodes (1a, 1b) of the electrode bundle are electrically connected by way of exactly one electrode strand.

7. Reduction furnace according to any one of claims 1 to 5, **characterised in that** the individual electrodes (1a, 1b) of the electrode bundle are connected with separate electrode strands.

8. Reduction furnace according to any one of the preceding claims, **characterised in that** individual electrodes (1 a, 1 b) of the electrode bundle are movable out of the furnace vessel (3) separately from one another.

9. Reduction furnace according to any one of the preceding claims, **characterised in that** the electrode bundle (1 a, 1 b) can rotate or oscillate about an individual centre point.

## Revendications

1. Four à réduction, en particulier pour la fabrication de silicium, comprenant
une carcasse du four (3) et plusieurs électrodes (1a, 1b) qui sont disposées dans la carcasse du four le long d'un arc de cercle (2) conformément à un agencement défini les unes par rapport aux autres, **caractérisé en ce qu'**au moins une des électrodes (1a, 1b) est réalisée sous la forme d'un faisceau d'électrodes constitué par plusieurs électrodes individuelles (1a, 1b), les électrodes individuelles (1a, 1b) étant disposées en une ligne perpendiculaire à l'arc de cercle (2).

2. Four à réduction selon la revendication 1, **caractérisé en ce que** les électrodes individuelles (1a, 1b) présentent chaque fois une section transversale essentiellement circulaire.

3. Four à réduction selon la revendication 1 ou 2, **caractérisé en ce que** les électrodes individuelles (1a, 1b) sont constituées de graphite, en particulier de graphite de pureté élevée.

4. Four à réduction selon la revendication 3, **caractérisé en ce que** les électrodes individuelles (1a, 1b) présentent un diamètre qui n'est pas supérieur à environ 650 mm, en particulier qui n'est pas supérieur à environ 450 mm.

5. Four à réduction selon la revendication 3 ou 4, **caractérisé en ce que** le four à réduction présente une puissance supérieure à environ 10 MW, en particulier supérieure à 12 MW.

6. Four à réduction selon l'une quelconque des revendications précédentes, **caractérisé en ce que** les électrodes individuelles (1a, 1b) du faisceau d'électrodes sont reliées électriquement via précisément une colonne d'électrodes.

7. Four à réduction selon l'une quelconque des revendications 1 à 5, **caractérisé en ce que** les électrodes individuelles (1a, 1b) du faisceau d'électrodes sont reliées à l'aide de colonnes d'électrodes séparées.

8. Four à réduction selon l'une quelconque des revendications précédentes, **caractérisé en ce que** les électrodes individuelles (1a, 1b) du faisceau d'électrodes peuvent être retirées de la carcasse du four (3) séparément les unes des autres.

9. Four à réduction selon l'une quelconque des revendications précédentes, **caractérisé en ce que** le faisceau d'électrodes (1a, 1b) peut effectuer des rotations ou osciller autour de son propre centre.
